# EUROPÄISCHE PATENTSCHRIFT

(11) **EP 3 707 450 B1**
(45) Veröffentlichungstag und Bekanntmachung des Hinweises auf die Patenterteilung: **27.10.2021**
(21) Anmeldenummer: 17808790.4
(22) Anmeldetag: 09.11.2017
(51) Int. Cl.: F16K 31/52, F16K 3/22, F27B 1/10, F16K 3/02, F16K 3/20, F16K 27/04

(54) **ABSPERRSCHIEBER**
GATE VALVE
ROBINET-VANNE

(43) Veröffentlichungstag der Anmeldung: 16.09.2020
(73) Patentinhaber: TMT Tapping-measuring-technology Sàrl, 1122 Luxemburg (LU)
(72) Erfinder: STEICHEN, Charles, 9080 Ettelbruck (LU); HUTMACHER, Patrick, 3282 Bettembourg (LU)
(74) Vertreter: advotec.
(86) Internationale Anmeldenummer: PCT/EP2017/078798
(87) Internationale Veröffentlichungsnummer: WO 2019/091563

(56) Entgegenhaltungen:
- WO-A1-2017/124192
- WO-A2-02/37001
- US-A- 1 874 627

## Beschreibung

Die vorliegende Erfindung betrifft einen Absperrschieber nach dem Oberbegriff des Anspruchs 1.

Absperrschieber der eingangs genannten Art dienen insbesondere zur gasdichten Absperrung von an einem Hochofen angeordneten Anschlussstutzen, die zum Anschluss von Messsonden dienen, welche durch den Anschlussstutzen in den Hochofen eingefahren werden können. Die Absperrschieber müssen sicherstellen, dass in einer Absperrstellung weder Gas noch Staub oder Möllerstoffe aus dem Hochofen in die Umgebung des Hochofens gelangen können.

Aufgrund der ständigen Beaufschlagung mit der Hochofenatmosphäre und der Beanspruchung der Schieberplatten beim Ein- und Ausfahren der Messsonde unterliegen die Absperrschieber einem hohen Verschleiß, der eine entsprechend häufige Wartung der Absperrschieber notwendig macht, um deren einwandfreie Funktion gewährleisten zu können.

Bei bekannten Absperrschiebern befindet sich die Schieberplatte, die mit einer Schieberdichtung zur Erzielung einer gasdichten Absperrstellung versehen ist, zwischen Gehäuseteilen des Schiebergehäuses, sodass zur Durchführung von Wartungsmaßnahmen, also insbesondere zum Austausch der Schieberdichtung, eine Zerlegung des Schiebergehäuses notwendig ist.

So zeigt beispielsweise die DE 40 00 139 A1 einen Absperrschieber, der die Schieberplatte in einer Anordnung zwischen einem Gehäuseoberteil und einem Gehäuseunterteil aufweist, wobei die Schieberdichtung benachbart der Schieberplatte in einer im Gehäuseoberteil ausgebildeten Dichtungsaufnahme angeordnet ist.

Aus der WO 2017/124192 A1 ist ein Absperrschieber bekannt, der in einem Schiebergehäuse in einer Schieberführung zwischen einer Absperrstellung und einer Öffnungsstellung eine bewegbare Schieberplatte aufweist, wobei die Schieberführung mit einer Schieberdichtung zur Erzielung einer gasdichten Absperrstellung versehen ist und die Schieberführung über eine Flanschverbindung mit dem Schiebergehäuse verbunden ist.

Die US 1 874 627 A zeigt in zwei unterschiedlichen Ausführungsformen einen Absperrschieber, der eine in einem Schiebergehäuse integral ausgebildete Schieberführung und in einer zweiten Ausführungsform einen Absperrschieber mit einer im Schiebergehäuse angeordneten Schieberführung aufweist, die gleichzeitig als Dichtung ausgebildet ist, wobei zur Abdichtung einer Schieberplatte gegenüber der Umgebung eine von der Schieberführung unabhängig ausgebildete weitere Dichtung vorgesehen ist.

Der vorliegenden Erfindung liegt die Aufgabe zugrunde, einen Absperrschieber vorzuschlagen, der eine vereinfachte Durchführung von Wartungsmaßnahmen an der Schieberdichtung ermöglicht.

Zur Lösung dieser Aufgabe weist der erfindungsgemäße Absperrschieber die Merkmale des Anspruchs 1 auf.

Erfindungsgemäß ist die Schieberführung über eine Flanschverbindung mit dem Schiebergehäuse verbunden, derart, dass die Schieberführung radial zu einer Durchströmungsachse des Absperrschiebers dem Schiebergehäuse entnommen werden kann.

Im Gegensatz zu dem bekannten Absperrschieber, bei dem die Schieberplatte zwischen dem Gehäuseoberteil und dem Gehäuseunterteil angeordnet ist, sodass eine Schieberführung durch das Gehäuse selbst ausgebildet ist, kann bei dem erfindungsgemäß ausgestalteten Absperrschieber die Schieberführung zusammen mit der Schieberdichtung dem Gehäuse entnommen werden. Eine Zerlegung des Gehäuses ist somit zum Austausch der Schieberdichtung nicht mehr notwendig. Vielmehr kann die Schieberführung dem Schiebergehäuse radial entnommen werden, sodass das Schiebergehäuse während des Austausches der Schieberdichtung an Ort und Stelle verbleiben kann, sodass der mit dem Austausch einer Schieberdichtung erforderliche Montageaufwand minimiert wird.

Erfindungsgemäß umfasst die Schieberführung zwei Führungshälften, die jeweils mit einem zur Abdichtung gegen eine von zwei einander gegenüberliegenden Schieberplattenflächen dienenden Dichtungselement der Schieberdichtung versehen sind. Hiermit ist zusätzlich zu der vereinfachten Wartung des Absperrschiebers eine doppelt wirkende Abdichtung der Schieberplatte realisiert, die sowohl eine Abdichtung der Schieberplatte zur Hochofenatmosphäre hin, als auch eine Abdichtung der Schieberplatte zur Umgebung hin ermöglicht.

Wenn die Führungshälften jeweils eine axiale Stützeinrichtung zur beidseitigen Abstützung gegen die Schieberplattenflächen aufweisen, lässt sich insbesondere im Zusammenwirken mit pneumatisch beaufschlagten Dichtungselementen über einen durch die axiale Stützeinrichtung eingestellten Abstand der Schieberplatte gegenüber den Führungshälften eine definierte Dichtkraft einstellen, mit der die Dichtungselemente gegen die Schieberplattenflächen anliegen.

Vorzugsweise weisen die Führungshälften an einer Gehäuseanschlussseite einen Ringflansch zur Ausbildung der Flanschverbindung als Klemmverbindung mit einem an einem Gehäuseteil des Schiebergehäuses ausgebildeten Ringflansch auf. Eine derartige Klemmverbindung ermöglicht insbesondere in dem Fall, wenn zur Ausbildung der Klemmverbindung ein mit den einander gegenüberliegenden Ringflanschen kombinierter Klemm- oder Spannring vorgesehen ist, eine einfache Demontage der Führungshälften durch eine dem Lösen der Klemmverbindungen nachfolgende radiale Entnahme der Führungshälften aus dem an Ort und Stelle verbleibenden Schiebergehäuse.

Vorzugsweise weisen die Führungshälften zur Anordnung des Dichtungselements einen Dichtungsträger auf, der zur Verbindung mit einem Gehäuseteil des Schiebergehäuses dient.

Vorzugsweise sind die Führungshälften unabhängig voneinander dem Schiebergehäuse entnehmbar, sodass die beim Austausch der Schieberdichtung zur handhabenden Massen möglichst gering gehalten werden können.

Wenn die Führungshälften als zusammenhängende Montageeinheit dem Schiebergehäuse entnehmbar sind, ist es möglich, in einem Montagevorgang beide Führungshälften gleichzeitig zu entnehmen, wobei es sich in diesem Zusammenhang als besonders vorteilhaft erweist, wenn die Schieberplatte einen Bestandteil der die Führungshälften aufweisenden Montageeinheit ausbildet. Eine derartige Ausgestaltung ermöglicht es, den mit einem Wartungsvorgang verbundenen Zeitaufwand auf ein Minimum zu reduzieren, da die Schieberplatte zusammen mit den Führungshälften in einem Montage- oder Handhabungsvorgang austauschbar ist und somit kein zeitlicher Aufwand für die Kombination der Führungshälften mit der Schieberplatte anfällt.

Wenn die Führungshälften unterschiedlich ausgebildet sind, können die Führungshälften insbesondere an unterschiedliche Oberflächen der Schieberplattenflächen angepasst sein.

Um die Relativanordnung der zwischen den Führungshälften aufgenommenen Schieberplatte während des Montagevorgangs zu sichern, ist es vorteilhaft, wenn zur Ausbildung der Montageeinheit die Führungshälften unter zwischenliegender Anordnung des Schieberplatte mittels einer temporären Montagesicherung miteinander verbunden sind.

Eine besonders einfache Ausgestaltung einer Montagesicherung ist möglich, wenn die Führungshälften mit axialen Spanneinrichtungen gegeneinander verspannt sind.

In einer besonderen Ausführungsform des Absperrschiebers sind die Führungshälften unterschiedlich ausgebildet und die Schieberplatte ist schalenförmig ausgebildet.

Bei einer derartigen Ausführungsform des Absperrschiebers ist es besonders vorteilhaft, wenn die Führungshälften zur Anordnung des Dichtungselements einen Dichtungsträger aufweisen, der gleichzeitig zur Ausbildung einer Stützeinrichtung dient, derart, dass die Stützeinrichtung eine Aufnahme für das Dichtungselement ausbildet. Somit ist eine besonders kompakte Ausgestaltung der Führungshälften möglich, bei denen die Stützeinrichtung eine Mehrfachfunktion erfüllt.

Nachfolgend werden bevorzugte Ausführungsformen der Erfindung anhand der Zeichnungen näher erläutert.

Es zeigen:
- **Fig. 1**: einen an einer Hochofenperipherie angeordneten, als Flachplattenschieber ausgeführten Absperrschieber, in Vorderansicht;
- **Fig. 2**: einen an einer Hochofenperipherie angeordneten, als Kalottenschieber ausgeführten Absperrschieber in Vorderansicht;
- **Fig. 3**: den in **Fig. 1** dargestellten Flachplattenschieber in isometrischer Darstellung;
- **Fig. 4**: den in **Fig. 3** dargestellten Flachplattenschieber in einer Schnittdarstellung gemäß Schnittlinienverlauf IV - IV;
- **Fig. 5**: den in **Fig. 3** dargestellten Flachplattenschieber in einer Schnittdarstellung gemäß Schnittlinienverlauf V - V;
- **Fig. 6**: eine vergrößerte Detaildarstellung des in **Fig. 5** dargestellten Flachplattenschiebers;
- **Fig. 7**: eine Schnittdarstellung des in **Fig. 3** dargestellten Flachplattenschiebers gemäß Schnittlinienverlauf VII - VII;
- **Fig. 8**: den in **Fig. 3** dargestellten Flachplattenschieber während der Demontage einer Führungshälfte einer Schieberführung;
- **Fig. 9**: den in **Fig. 2** dargestellten Kalottenschieber in isometrischer Darstellung;
- **Fig.** 10 den: in **Fig. 9** dargestellten Kalottenschieber gemäß Schnittlinienverlauf X - X;
- **Fig. 11**: den in **Fig. 9** dargestellten Kalottenschieber gemäß Schnittlinienverlauf XI - XI;
- **Fig. 12**: den in **Fig. 9** dargestellten Kalottenschieber in Seitenansicht mit einer aus der Schieberplatte und den Führungshälften gebildeten Montageeinheit vor der Entnahme aus dem Schiebergehäuse;
- **Fig. 13**: die in **Fig. 12** dargestellte Montageeinheit während der Entnahme aus dem Schiebergehäuse.

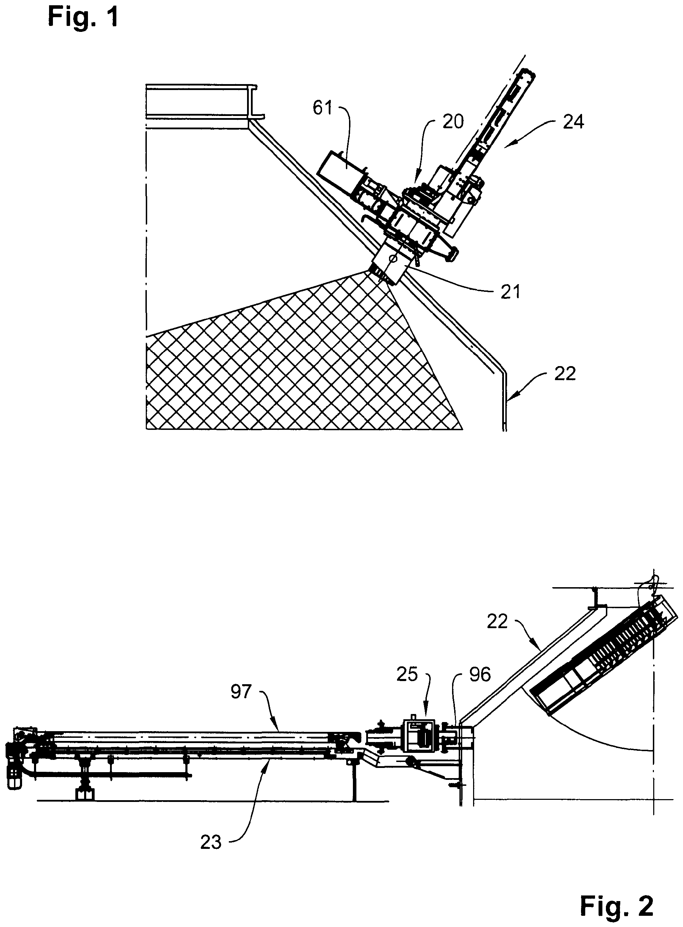

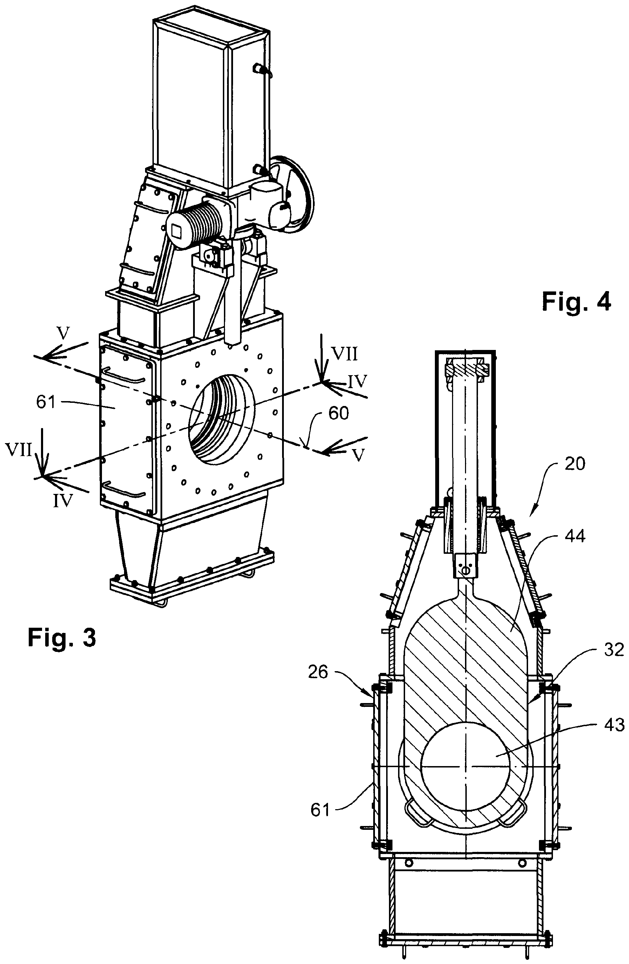

**Fig. 1** zeigt in einer Vorderansicht einen als Flachplattenschieber ausgebildeten Absperrschieber 20, der in einer Hochofenperipherie an einen Anschlussstutzen 21 eines Hochofens 22 angeschlossen ist und den gasdichten Anschluss einer Messsonde 24 ermöglicht, die nach Überführung des Absperrschiebers 20 von seiner Absperrstellung in seine Öffnungsstellung durch eine insbesondere in **Fig. 4** dargestellte Durchgangsöffnung 43 einer Schieberplatte 32 in den Innenraum des Hochofens 22 eingeführt werden kann. **Fig. 2** zeigt eine entsprechende Anordnung, bei der ein als Kalottenschieber ausgeführter Absperrschieber 25 an einen Anschlussstutzen 96 des Hochofens 22 angeschlossen ist, wobei der Absperrschieber 25 den gasdichten Anschluss einer auf einer Lafette 23 angeordneten Messsonde 97 ermöglicht.

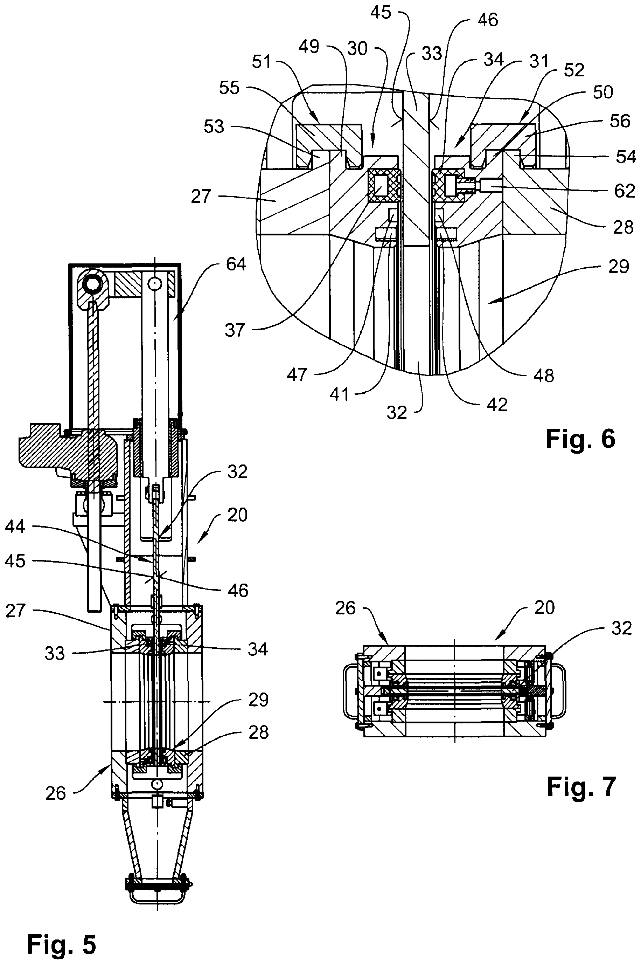

Wie insbesondere aus einer Zusammenschau der **Fig. 3** bis **7** hervorgeht, weist der im vorliegenden Fall als Flachplattenschieber ausgeführte Absperrschieber 20 ein Schiebergehäuse 26 auf, das, wie insbesondere **Fig. 6** zeigt, zwischen zwei Gehäuseteilen 27, 28 eine Schieberführung 29 mit zwei Führungshälften 30, 31 aufweist, zwischen denen eine im Falle des hier dargestellten, als Flachplattenschieber ausgeführten Absperrschiebers 20 als ebene Platte ausgeführte Schieberplatte 32 angeordnet ist.

Wie insbesondere der **Fig. 6** zu entnehmen ist, weisen die Führungshälften 30, 31 jeweils ein Dichtungselement 33, 34 auf. Die Dichtungselemente 33, 34 sind im vorliegenden Fall als pneumatische Schlauchdichtungen ausgebildet und weisen daher einen Hohlraum 37 auf, der über eine Druckleitung 62 mit Gasdruck beaufschlagbar ist.

Neben den Dichtungselementen 33, 34 weisen die Führungshälften 30, 31 Abstreifer 41, 42 auf, welche bei einer Überführung der Schieberplatte 32 in ihre in den **Fig. 3** bis 7 dargestellte Öffnungsstellung etwaige an einem oberhalb der Durchgangsöffnung 43 auf einem Verschlussabschnitt 44 anhaftende Schmutzpartikel von Schieberblattflächen 45, 46 abstreifen, um die Dichtungselemente 33, 34 vor einer Beeinträchtigung durch Schmutzpartikel zu schützen.

Wie insbesondere **Fig. 6** zeigt, ermöglichen die Führungshälften 30, 31 im vorliegenden Fall darüber hinaus die Anordnung jeweils einer zur beidseitigen Abstützung gegen die Schieberblattflächen 45, 46 dienenden axialen Stützeinrichtung 47, 48, wobei die Stützeinrichtungen 47, 48 beispielsweise als PTFE-Ringe ausgeführt sein können.

**Fig. 6** zeigt, dass die Führungshälften 30, 31 jeweils einen Ringflansch 49, 50 aufweisen, die zur Ausbildung einer Klemmverbindung 51, 52 jeweils benachbart einem an dem angrenzenden Gehäuseteil 27, 28 ausgebildeten Ringflansch 53, 54 angeordnet sind, wobei die Ringflansche 49, 53 beziehungsweise 50, 54 in der dargestellten Relativanordnung durch jeweils zweiteilig ausgeführte Klemmringe 55, 56 gegeneinander verspannt sind.

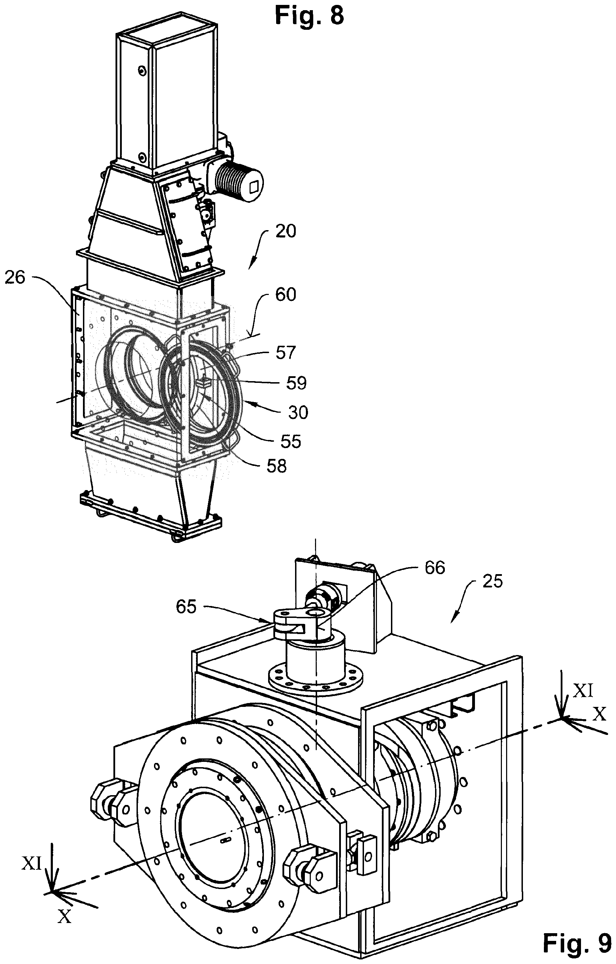

Wie insbesondere aus **Fig. 8** ersichtlich ist, kann jede Führungshälfte 30, 31 nach Entfernung der jeweiligen Klemmverbindung 51, 52 **(****Fig. 6****)** durch Lösen von Bolzenverbindungen 59, die jeweils zwei Halbringe 57, 58 der Klemmringe 55, 56 miteinander verbindenden, Bezug nehmend auf eine Durchströmungsachse 60 des Absperrschiebers 20 radial dem Schiebergehäuses 26 entnommen werden, nachdem lediglich ein Seitendeckel 61 des Gehäuses entfernt worden ist.

Wie insbesondere aus einer Zusammenschau der **Fig. 1** und **6** deutlich wird, kann zur Entfernung des Seitendeckels 61 und der nachfolgenden Demontage der Führungshälften 30, 31 der Schieberführung 29 der Absperrschieber 20 an Ort und Stelle in seiner Position am Anschlussstutzen 21 des Hochofens 22 verbleiben.

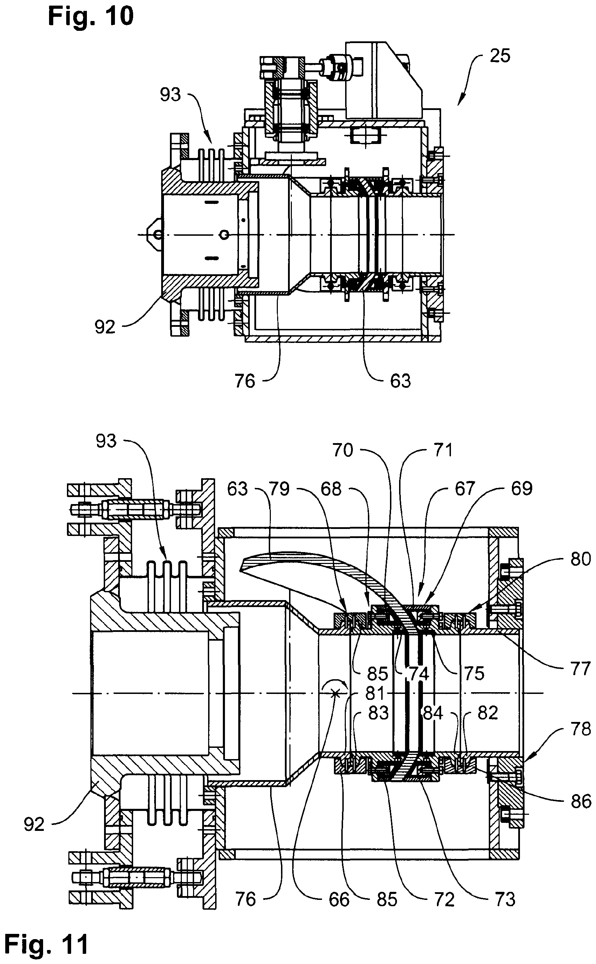

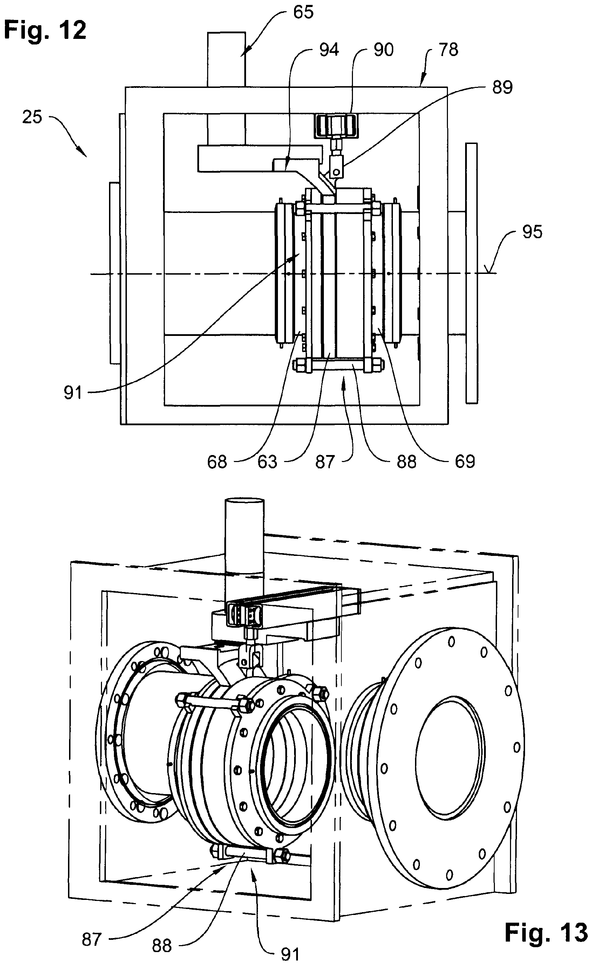

**Fig. 9** zeigt den in seiner Relativanordnung zu einem Hochofen 22 in **Fig. 2** dargestellten, hier als Kalottenschieber ausgeführten Absperrschieber 25 in isometrischer Darstellung. Wie insbesondere aus der Schnittdarstellung gemäß **Fig. 11** deutlich wird, weist der Absperrschieber 25 eine sphärisch ausgebildete, hier als Kalotte bezeichnete Schieberplatte 63 auf, die im Unterschied zu der als ebene Platte ausgeführten Schieberplatte 32 des Absperrschiebers 20 nicht mit einer translatorischen Antriebseinrichtung 64 (siehe **Fig. 5**) zur translatorischen Überführung der Schieberplatte 32 von einer Öffnungsstellung in einer Absperrstellung und umgekehrt versehen ist, sondern einen Drehantrieb 65 (siehe **Fig. 9** und **12**) aufweist, der, wie in **Fig. 11** durch den Drehrichtungspfeil angedeutet, zur Überführung der Schieberplatte 63 aus der dargestellten Öffnungsstellung in eine Absperrstellung eine Drehbewegung um eine Schwenkachse 66 ausführt.

Wie **Fig. 11** zeigt, weist eine Schieberführung 67 des Absperrschiebers 25 zur Anpassung an die sphärische Ausgestaltung der Schieberplatte 63 zwei unterschiedlich ausgebildete Führungshälften 68, 69 auf, die jeweils zur Anordnung eines Dichtungselements 70, 71 einen Dichtungsträger 72, 73 aufweisen, die gleichzeitig zur Ausbildung einer axialen Stützeinrichtung dienen, derart, dass die Stützeinrichtungen eine Aufnahme für die Dichtungselemente 70, 71 ausbilden.

Entsprechend den Führungshälften 30, 31 des Absperrschiebers 20 sind auch die Führungshälften 68, 69 des Absperrschiebers 62 jeweils mit einem Abstreifer 74, 75 versehen. Zur Verbindung mit jeweils einem Gehäuseteil 76, 77 eines Schiebergehäuses 78 sind zwischen den Führungshälften 68, 69 und den Gehäuseteilen 76, 77 Klemmverbindungen 79vorgesehen, derart, dass die Gehäuseteile 76, 77 und die Führungshälften 68, 69 jeweils einander angrenzend mit Ringflanschen 81, 82 beziehungsweise 83, 84 versehen sind, welche, wie bereits zuvor bezugnehmend auf die **Fig. 6** und **8** erläutert, über zweiteilige Klemmringe 85, 86 miteinander verspannt sind.

Zur Demontage der Führungshälften 68, 69 werden die Führungshälften 68, 69 und die zwischen den Führungshälften 68, 69 aufgenommene Schieberplatte 63 mittels einer temporären Montagesicherung 87 zu einer Montageeinheit 91 zusammengefasst, wobei die Montagesicherung 87 im vorliegenden Fall drei Bolzenverbindungen 88 umfasst, welche die Führungshälften 68, 69 mit der zwischenliegend angeordneten Schieberplatte 63, wie in den **Fig. 12** und **13** dargestellt, verspannen. Erst nach Ausführung der Montagesicherung 87 werden die Klemmverbindungen 79, 80 zwischen den Führungshälften 68, 69 und den Gehäuseteilen 76, 77 sowie eine zwischen dem Drehantrieb 65 und der Schieberplatte 63 ausgebildete Kupplung 94 gelöst. Anschließend kann die Montageeinheit 91, die über einen Mitnehmer 89 mit einer am Schiebergehäuse 78 angeordneten Montageschiene 90 verbunden ist, für den Monteur gewichtsentlastet radial zu einer Durchströmungsachse 95 des Absperrschiebers 25 dem Schiebergehäuse 78 entnommen werden.

Wie insbesondere den **Fig. 9** bis **11** zu entnehmen ist, ist das Schiebergehäuse 78 des Absperrschiebers 25 zum Anschluss an die in **Fig. 2** dargestellte Messsonde 24 mit einer Stopfbuchse 92 versehen, welche über einen Kompensator 93, der einen variablen Eintrittswinkel der Messsonde 24 durch die aus der Stopfbuchse 92 und dem Absperrschieber 25 gebildete Anordnung in den Hochofen 22 ermöglicht. Wie **Fig. 1** zeigt, ist eine entsprechende Anordnung auch für den Absperrschieber 20 vorgesehen.

Aus dem Vorstehenden wird deutlich, dass der Austausch der mit den Dichtungselementen 33, 34 bzw. 70, 71 versehenen Schieberführungen 29 bzw. 67 sowohl an dem Absperrschieber 20 als auch an dem Absperrschieber 25 nicht nur unter Beibehaltung der installierten Position der Absperrschieber 20, 25 am Hochofen 22 erfolgen kann, sondern dass insbesondere auch eine Trennung der Schiebergehäuse 26, 78 der Absperrschieber 20, 25 von angeschlossenen Komponenten, wie hier insbesondere die jeweils über den Kompensator 93 an die Schiebergehäuse 26, 78 angeschlossene Stopfbuchsen 92 nicht erforderlich ist.

## Patentansprüche

1. Absperrschieber (20, 25) mit einer in einem Schiebergehäuse (26, 78) in einer Schieberführung (29, 67) zwischen einer Absperrstellung und einer Öffnungsstellung bewegbaren Schieberplatte (32, 63), wobei die Schieberführung (29, 67) mit einer Schieberdichtung zur Erzielung einer gasdichten Absperrstellung versehen ist, wobei die Schieberführung (29, 67) über eine Flanschverbindung mit dem Schiebergehäuse (26, 78) verbunden ist,
**dadurch gekennzeichnet,**
**dass** die Schieberführung (29, 67) zwei Führungshälften (30, 31; 68, 69) umfasst, die jeweils mit einem zur Abdichtung gegen eine von zwei einander gegenüberliegenden Schieberblattflächen (45, 46) dienenden Dichtungselement (33, 34; 70, 71) der Schieberdichtung versehen sind, derart, dass die Schieberführung (29, 67) radial zu einer Durchströmungsachse (60, 95) des Absperrschiebers (20, 25) zusammen mit der Schieberdichtung dem Schiebergehäuse (26, 78) entnommen werden kann.

2. Absperrschieber nach Anspruch 1,
**dadurch gekennzeichnet,**
**dass** die Führungshälften (30, 31; 68, 69) jeweils eine axiale Stützeinrichtung (47, 48) zur beidseitigen Abstützung gegen die Schieberplattenflächen (45, 46) aufweisen.

3. Absperrschieber nach Anspruch 1 oder 2,
**dadurch gekennzeichnet,**
**dass** die Führungshälften (30, 31; 68, 69) an einer Gehäuseanschlussseite einen Ringflansch (49, 50; 83, 84) zur Ausbildung der Flanschverbindung als Klemmverbindung (51, 52; 79, 80) mit einem an einem Gehäuseteil (27, 28; 76, 77) des Schiebergehäuses (26, 78) ausgebildeten Ringflansch (53, 54; 81, 82) aufweisen.

4. Absperrschieber nach einem der vorangehenden Ansprüche,
**dadurch gekennzeichnet,**
**dass** die Führungshälften (30, 31) zur Anordnung des Dichtungselements (33, 34) einen Dichtungsträger aufweisen, der zur Verbindung mit einem Gehäuseteil (27, 28) des Schiebergehäuses (26) dient.

5. Absperrschieber nach einem der vorangehenden Ansprüche,
**dadurch gekennzeichnet,**
**dass** die Führungshälften (30, 31) unabhängig voneinander dem Schiebergehäuse (26) entnehmbar sind.

6. Absperrschieber nach einem der vorangehenden Ansprüche,
**dadurch gekennzeichnet,**
**dass** die Führungshälften (30, 31) unterschiedlich ausgebildet sind.

7. Absperrschieber nach einem der vorangehenden Ansprüche,
**dadurch gekennzeichnet,**
**dass** die Führungshälften (68, 69) als zusammenhängende Montageeinheit (91) dem Schiebergehäuse (78) entnehmbar sind.

8. Absperrschieber nach Anspruch 7,
**dadurch gekennzeichnet,**
**dass** die Schieberplatte (63) einen Bestandteil der Montageeinheit (91) ausbildet.

9. Absperrschieber nach Anspruch 8,
**dadurch gekennzeichnet,**
**dass** zur Ausbildung der Montageeinheit (91) die Führungshälften (68, 69) unter zwischenliegender Anordnung der Schieberplatte (63) mittels einer temporären Montagesicherung (87) miteinander verbunden sind.

10. Absperrschieber nach Anspruch 9,
**dadurch gekennzeichnet,**
**dass** zur Ausbildung der Montagesicherung (87) die Führungshälften (68, 69) mit axialen Spanneinrichtungen gegeneinander verspannt sind.

11. Absperrschieber nach Anspruch 10,
**dadurch gekennzeichnet,**
**dass** die Führungshälften (68, 69) unterschiedlich ausgebildet sind und die Schieberplatte (63) schalenförmig ausgebildet ist.

12. Absperrschieber nach Anspruch 11,
**dadurch gekennzeichnet,**
**dass** die Führungshälften (68, 69) zur Anordnung des Dichtungselements (70, 71) einen Dichtungsträger (72, 73) aufweisen, der gleichzeitig zur Ausbildung einer Stützeinrichtung dient, derart, dass die Stützeinrichtung eine Aufnahme für das Dichtungselement (70, 71) ausbildet.

## Claims

1. A slide valve (20, 25) having a slide valve plate (32, 63) movable in a slide valve rail (29, 67) between a locked position and an open position in a slide valve casing (26, 78), said slide valve rail (29, 67) being provided with a slide valve seal for attaining a gas-proof locked position,
**characterized in that**
the slide valve rail (29, 67) has two rail halves (30, 31; 68, 69) which are each provided with a seal element (33, 34; 70, 71) of the slide valve seal, said seal element (33, 34; 70, 71) being intended to seal against one of two vis-à-vis slide valve plate surfaces (45, 46) in such a manner that the slide valve rail (29, 67) is removable from the slide valve casing (26, 78) radially to a flow axis (60, 95) of the slide valve (20, 25) together with slide valve seal.

2. The slide valve according to claim 1,
**characterized in that**
the rail halves (30, 31; 68, 69) each comprise an axial support device (47, 48) for support against the slide valve plate surfaces (45, 46) on both sides.

3. The slide valve according to claim 1 or 2,
**characterized in that**
at a casing connection side, the rail halves (30, 31; 68, 69) have a circular flange (49, 50; 83, 84) for forming the flange connection as a clamp connection (51, 52; 79, 80) using a circular flange (53, 54; 81, 82) formed at a casing part (27, 28; 76, 77) of the slide valve casing (26, 78).

4. The slide valve according to any one of the preceding claims,
**characterized in that**
the rail halves (30, 31) comprise a seal carrier for disposing the seal element (33, 34), said seal carrier serving for being connected to a casing part (27, 28) of the slide valve casing (26).

5. The slide valve according to any one of the preceding claims,
**characterized in that**
the rail halves (30, 31) are removable from the slide valve casing (26) independently of each other.

6. The slide valve according to any one of the preceding claims,
**characterized in that**
the rail halves (30, 31) are realized differently to each other.

7. The slide valve according to any one of the preceding claims,
**characterized in that**
the rail halves (68, 69) are removable from the slide valve casing (78) as a connected mounting unit (91).

8. The slide valve according to claim 7,
**characterized in that**
the slide valve plate (63) is a component of the mounting unit (91).

9. The slide valve according to claim 8,
**characterized in that**
for forming the mounting unit (91), the rail halves (68, 69) are connected to each other having the slide valve plate (63) therebetween and by means of a temporary mounting safeguard (87).

10. The slide valve according to claim 9,
**characterized in that**
for forming the mounting safeguard (87), the rail halves (68, 69) are braced against each other using axial bracing devices.

11. The slide valve according to claim 10,
**characterized in that**
the rail halves (68, 69) are formed differently to each other and the slide valve plate (63) is shaped like a cup.

12. The slide valve according to claim 11,
**characterized in that**
for disposing the seal element (70, 71), the rail halves (68, 69) comprise a seal carrier (72, 73) which simultaneously serves for forming a support device in such a manner that the support device forms a reception for the seal element (70, 71).

## Revendications

1. Vanne d'arrêt (20, 25) ayant une plaque de vanne d'arrêt (32, 63) déplaçable dans un guidage de vanne d'arrêt (29, 67) entre une position de verrouillage et une position ouverte dans un boîtier de vanne d'arrêt (26, 78), ledit guidage de vanne d'arrêt (29, 67) étant pourvu d'une étanchéité de vanne d'arrêt pour atteindre une position de verrouillage étanche au gaz,
**caractérisé en ce que**
le guidage de vanne d'arrêt (29, 67) a deux moitiés de guidage (30, 31; 68, 69) qui sont chacune pourvue d'un élément d'étanchéité (33, 34; 70, 71) de l'étanchéité de vanne d'arrêt, qui (33, 34; 70, 71) est prévu pour l'étanchéité contre un de deux surfaces de plaque de vanne d'arrêt (45, 46) opposées, de telle manière que le guidage de vanne d'arrêt (29, 67) peut être sorti du boîtier de vanne d'arrêt (26, 78) avec l'étanchéité de vanne d'arrêt radialement à un axe d'écoulement (60, 95) de la vanne d'arrêt (20, 25).

2. Vanne d'arrêt selon la revendication 1,
**caractérisé en ce que**
chaque moitié de guidage (30, 31; 68, 69) comprend un moyen de support (47, 48) axial pour le support contre les surfaces de plaque de vanne d'arrêt (45, 46) sur tous les deux côtés.

3. Vanne d'arrêt selon la revendication 1 ou 2,
**caractérisé en ce que**
sur un côté de connexion de boîtier, les moitiés de guidage (30, 31; 68, 69) ont une bride circulaire (49, 50; 83, 84) pour former la connexion de bride comme connexion de serrage (51, 52; 79, 80) en utilisant une bride circulaire (53, 54; 81, 82) formée sur un part (27, 28; 76, 77) du boîtier de vanne d'arrêt (26, 78).

4. Vanne d'arrêt selon l'une quelconque des revendications précédentes,
**caractérisé en ce que**
les moitiés de guidage (30, 31) comprennent un porteur d'étanchéité pour disposer l'élément d'étanchéité (33, 34), ledit porteur d'étanchéité servant à être relié à un part (27, 28) du boîtier de vanne d'arrêt (26).

5. Vanne d'arrêt selon l'une quelconque des revendications précédentes,
**caractérisé en ce que**
les moitiés de guidage (30, 31) peuvent être sorties du boîtier de vanne d'arrêt (26) indépendamment l'une de l'autre.

6. Vanne d'arrêt selon l'une quelconque des revendications précédentes,
**caractérisé en ce que**
les moitiés de guidage (30, 31) sont différentes l'une de l'autre.

7. Vanne d'arrêt selon l'une quelconque des revendications précédentes,
**caractérisé en ce que**
les moitiés de guidage (68, 69) peuvent être sorties du boîtier de vanne d'arrêt (78) comme une unité de montage (91) reliée.

8. Vanne d'arrêt selon la revendication 7,
**caractérisé en ce que**
la plaque de vanne d'arrêt (63) est un élément de l'unité de montage (91).

9. Vanne d'arrêt selon la revendication 8,
**caractérisé en ce que**
pour former l'unité de montage (91), les moitiés de guidage (68, 69) sont reliées l'une à l'autre pendant que la plaque de vanne d'arrêt (63) est disposée entre elles et au moyen d'une sécurité de montage (87) temporaire.

10. Vanne d'arrêt selon la revendication 9,
**caractérisé en ce que**
pour former la sécurité de montage (87), les moitiés de guidage (68, 69) sont serrées l'une contre l'autre en utilisant des moyens de serrage axiaux.

11. Vanne d'arrêt selon la revendication 10,
**caractérisé en ce que**
les moitiés de guidage (68, 69) sont différentes l'une de l'autre et la plaque de vanne d'arrêt (63) est en forme de gobelet.

12. Vanne d'arrêt selon la revendication 11,
**caractérisé en ce que**
pour disposer l'élément d'étanchéité (70, 71), les moitiés de guidage (68, 69) comprennent un porteur d'étanchéité (72, 73) qui est prévu simultanément à former un moyen de support de telle manière que le moyen de support forme une réception pour l'élément d'étanchéité (70, 71).
